# EUROPEAN PATENT APPLICATION

(11) **EP 4 350 532 A1**
(43) Date of publication of application: **10.04.2024**
(21) Application number: 22204225.1
(22) Date of filing: 27.10.2022
(51) Int. Cl.: G06F 16/383, G06F 16/34, G06F 16/93

(54) **METHOD AND APPARATUS FOR SUMMARIZING DOCUMENT**

(30) Priority: 07.10.2022 KR 20220128270
(71) Applicant: 42Maru Inc., Seocho-gu Seoul 06533 (KR)
(72) Inventor: KIM, Dong Hwan, 02087 Seoul (KR); JEONG, Woo Tae, 13608 Seongnam-si, Gyeonggi-do (KR); KIM, Hyun Ok, 14346 Gwangmyeong-si, Gyeonggi-do (KR); PARK, Ju Shick, 16929 Yongin-si, Gyeonggi-do (KR); CHANG, Hyung Jin, 06529 Seoul (KR); SOHN, Ah Rim, 03030 Seoul (KR)
(74) Representative: BCKIP Part mbB

(57) **Abstract**

According to an embodiment of the present application, a method of summarizing a document includes: extracting a summary target document based on a user search query; acquiring a trained document summary model; and inputting the summary target document to the trained document summary model, acquiring a first summary vector through a first output layer of the trained document summary model, and acquiring a summary sentence based on a generated summary based on the first summary vector, in which the document summary model is trained based on a training data set including an original document and generated summary correct answer information, acquires the original document through an input layer, and is trained to output output data approximating the generated summary correct answer information based on a difference between the output data output through the first output layer of the document summary model and the generated summary correct answer information.

## Description

### 1. Field of the Invention

The present invention relates to a method and apparatus for summarizing a document. More particularly, the present invention relates to a method and apparatus for summarizing a document for searching for a document according to a user request and summarizing contents of the retrieved document.

### 2. Discussion of Related Art

There is a problem in that it takes a lot of time for users to search for related data to create data such as a report and directly check data to search for desired contents in a result list item. In order to solve this problem, research on technology that searches for related documents according to a user request and provides a summary of desired contents is attracting attention.

Meanwhile, a method of summarizing and providing a document is mainly composed of an extracted summary and a generated summary. In the case of the extracted summary, a method of extracting and providing phrases in a document has an advantage of being relatively easy and fast to summarize, but has a disadvantage in that the phrases may not be extracted as a relatively natural sentence. On the other hand, the generated summary has the advantage of providing a relatively natural summary by generating and providing a new sentence based on the contents in the document.

However, there was a limitation that the conventional document summary technology was biased toward generating a summary sentence based on an extracted summary. Therefore, it is required to develop a new method and apparatus for summarizing a document for providing a summary sentence based on a generated summary.

### SUMMARY OF THE INVENTION

The present invention provides a method and apparatus for summarizing a document for generating a summary sentence summarizing contents desired by a user in a retrieved document by searching for a related document based on a user's query.

The present invention provides a method and apparatus for summarizing a document for training a document summary model for generating a summary sentence based on a generated summary and a summary sentence based on an extracted summary.

Objects that are to be solved by the present disclosure are not limited to the above-described objects, and objects that are not described will be clearly understood by those skilled in the art to which the present disclosure pertains from the present specification and the accompanying drawings.

According to an embodiment of the present application, a method of summarizing a document includes: extracting a summary target document based on a user search query; acquiring a trained document summary model; and inputting the summary target document to the trained document summary model, acquiring a first summary vector through a first output layer of the trained document summary model, and acquiring a summary sentence based on a generated summary based on the first summary vector, in which the document summary model may be trained based on a training data set including an original document and generated summary correct answer information, may acquire the original document through an input layer, and may be trained to output output data approximating the generated summary correct answer information based on a difference between the output data output through the first output layer of the document summary model and the generated summary correct answer information.

An apparatus for summarizing a document includes a processor configured to extract a summary target document based on a user search query, acquire a trained document summary model, input the summary target document to the trained document summary model, acquire a first summary vector through a first output layer of the trained document summary model, and acquire a summary sentence based on a generated summary based on the first summary vector, in which the document summary model may be trained based on a training data set including an original document and generated summary correct answer information, may acquire the original document through an input layer, and may be trained to output output data through a first output layer of the document summary model and output output data approximating the generated summary correct answer information based on a difference between the output data output through the first output layer of the document summary model and the generated summary correct answer information.

Technical solutions of the present disclosure are not limited to the abovementioned solutions, and solutions that are not mentioned will be clearly understood by those skilled in the art to which the present disclosure pertains from the present specification and the accompanying drawings.

### BRIEF DESCRIPTION OF THE DRAWINGS

FIG. 1 is a schematic diagram illustrating an apparatus for summarizing a document according to an embodiment of the present application.
FIG. 2 is a diagram illustrating an operation of searching for a summary target document from a user search query of an apparatus for summarizing a document according to an embodiment of the present application.
FIG. 3 is a diagram illustrating an operation of generating a summary sentence through a document summary model of an apparatus for summarizing a document according to an embodiment of the present application.
FIG. 4 is a flowchart illustrating a method of summarizing a document according to an embodiment of the present application.
FIG. 5 is a flowchart illustrating an operation of extracting a summary target document in detail according to an embodiment of the present application.
FIG. 6 is a flowchart illustrating an operation of determining a summary target document in detail according to an embodiment of the present application.
FIG. 7 is a flowchart illustrating an operation of acquiring a summary sentence based on a generated summary from an extracted summary target document in detail according to an embodiment of the present application.
FIG. 8 is a diagram for describing a training data set for training a document summary model according to an embodiment of the present application.
FIG. 9 is a diagram illustrating an aspect of training a document summary model according to an embodiment of the present application.

### DETAILED DESCRIPTION OF EXEMPLARY EMBODIMENTS

The above-described objects, features, and advantages of the present application will become more obvious from the following detailed description provided in relation to the accompanying drawings. However, the present application may be variously modified and have several exemplary embodiments. Therefore, specific exemplary embodiments of the present invention will be illustrated in the accompanying drawings and described in detail.

In principle, same reference numerals denote the same constituent elements throughout the specification. Further, elements having the same function within the scope of the same idea shown in the drawings of each embodiment will be described using the same reference numerals, and overlapping descriptions thereof will be omitted.

When it is determined that a detailed description for known functions or configurations related to the present disclosure may obscure the gist of the present disclosure, the detailed description therefor will be omitted. In addition, numbers (for example, first, second, etc.) used in the description of the present specification are merely identification symbols for distinguishing one element from other elements.

In addition, terms "module" and "unit" for components used in the following embodiment are used only to easily make the disclosure. Therefore, these terms do not have distinct meanings or roles by themselves.

In the following embodiments, singular forms include plural forms unless the context clearly dictates otherwise.

In the following embodiments, the term "include" or "have" means that features or elements described in the specification are present, and unless specifically limited, and does not preclude the possibility that one or more other features or components may be added unless specifically limited.

In the drawings, sizes of components may be exaggerated or reduced in the accompanying drawings for convenience of explanation. For example, since sizes and thicknesses of the respective components illustrated in the drawings are arbitrarily illustrated for convenience of description, the present disclosure is not necessarily limited to those illustrated in the drawings.

In cases where certain embodiments can be otherwise implemented, an order of certain processes may be performed differently from the order in which they are described. For example, two processes described in succession may be performed substantially simultaneously, or may be performed in an order opposite to the order described.

In the following embodiments, when components or the like are connected, the components include not only cases in which the components are directly connected, but also cases in which components are interposed between the components and connected indirectly.

For example, in the present specification, when components are electrically connected, components include not only a case in which the components are directly electrically connected, but also a case in which components or the like are interposed therebetween to be indirectly electrically connected.

According to an embodiment of the present application, a method of summarizing a document includes: extracting a summary target document based on a user search query; acquiring a trained document summary model; and inputting the summary target document to the trained document summary model, acquiring a first summary vector through a first output layer of the trained document summary model, and acquiring a summary sentence based on a generated summary based on the first summary vector, in which the document summary model may be trained based on a training data set including an original document and generated summary correct answer information, may acquire the original document through an input layer, and may be trained to output output data approximating the generated summary correct answer information based on a difference between the output data output through the first output layer of the document summary model and the generated summary correct answer information.

According to an embodiment of the present application, the acquiring of the summary sentence based on a generated summary further includes acquiring a second summary vector through a second output layer of the trained document summary model, and acquiring a summary sentence based on an extracted summary based on the second summary vector, and the document summary model may be trained to output an extracted summary vector through the second output layer of the document summary model using the extracted summary vector determined by calculating a similarity between the generated summary correct answer information and each sentence included in the original document.

According to an embodiment of the present application, the extracting of the summary target document may further include: acquiring the user search query; calculating a sentence unit vector from the user search query and acquiring a first document candidate group based on a similarity between the calculated vector and an embedding vector of a document stored in a search database; extracting key query information from the user search query through a user query analysis module, and acquiring a second document candidate group based on a similarity between the extracted key query information and keyword information of the document stored in the search database; and determining the summary target document based on the first document candidate group and the second document candidate group.

According to an embodiment of the present application, the determining of the summary target document may further include: acquiring documents included in the first document candidate group and documents included in the second document candidate group as a primary document candidate group; and selecting the summary target document from the primary document candidate group by analyzing a similarity between contents of a candidate document included in the primary document candidate group and the user search query through a search ranking adjustment module.

According to an embodiment of the present application, the search ranking adjustment module may be configured to receive the candidate document included in the primary document candidate group and the user search query, calculate a similarity score related to a semantic similarity between the candidate document and the user search query, adjust a ranking of the candidate document included in the primary document candidate group based on the calculated similarity score, and select the summary target document from the primary document candidate group based on the adjusted ranking.

According to an embodiment of the present application, a computer-readable recording medium on which a program for executing the method of summarizing a document on a computer is recorded may be provided.

According to an embodiment of the present application, an apparatus for summarizing a document includes a processor configured to extract a summary target document based on a user search query, acquire a trained document summary model, input the summary target document to the trained document summary model, acquire a first summary vector through a first output layer of the trained document summary model, and acquire a summary sentence based on a generated summary based on the first summary vector, in which the document summary model may be trained based on a training data set including an original document and generated summary correct answer information, and may be trained to acquire the original document through an input layer, and outputs data output through a first output layer of the document summary model and outputs output data approximating the generated summary correct answer information based on a difference between the output data output through the first output layer of the document summary model and the generated summary correct answer information.

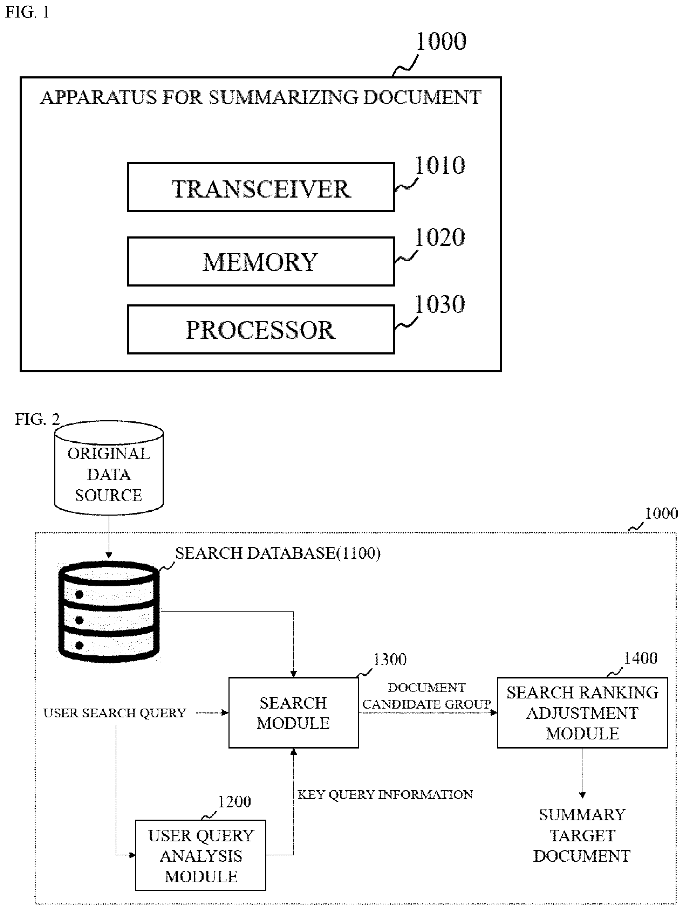

Hereinafter, a method and apparatus for summarizing a document according to an embodiment of the present application will be described with reference to FIGS. 1 to 9.

FIG. 1 is a schematic diagram illustrating an apparatus 1000 for summarizing a document according to an embodiment of the present application.

The apparatus 1000 for summarizing a document according to the embodiment of the present application may include a transceiver 1010, a memory 1020, and a processor 1030.

The transceiver 1010 of the apparatus 1000 for summarizing a document may communicate with any external device (or external server) including a database in which an original data source is stored and a user device. For example, the apparatus 1000 for summarizing a document may receive a user search query input through the user device through the transceiver 1010. For example, the apparatus 1000 for summarizing a document may receive original data from the database in which the original data source is stored, and construct a search database based on the original data. For example, the apparatus 1000 for summarizing a document may transmit the generated summary sentence to any external device including the user device.

The apparatus 1000 for summarizing a document may access a network through the transceiver 1010 to transmit/receive various types of data. The transceiver 1010 may largely include a wired type and a wireless type. Since the wired type and the wireless type have their respective advantages and disadvantages, in some cases, the wired type and the wireless type may be simultaneously provided in the apparatus 1000 for summarizing a document. Here, in the case of the wireless type, a wireless local area network (WLAN)-based communication method such as Wi-Fi may be mainly used. Alternatively, in the case of the wireless type, cellular communication, for example, long term evolution (LTE), 5G-based communication methods may be used. However, a wireless communication protocol is not limited to the above-described example, and any suitable wireless type communication method may be used. In the case of the wired type, local area network (LAN) or universal serial bus (USB) communication method is a representative example, and other methods are also possible.

The memory 1020 of the apparatus 1000 for summarizing a document may store various types of information. Various types of data may be temporarily or semi-permanently stored in the memory 1020. Examples of the memory 1020 may include a hard disk drive (HDD), a solid state drive (SSD), a flash memory, a read-only memory (ROM), a random access memory (RAM), or the like. The memory 1020 may be provided in a form embedded in the apparatus 1000 for summarizing a document or in a detachable form from the apparatus 1000 for summarizing a document. The memory 1020 may store an operating system (OS) for driving the apparatus 1000 for summarizing a document or various types of data necessary for the operation of the apparatus 1000 for summarizing a document, including a program for operating each component of the apparatus 1000 for summarizing a document.

The processor 1030 may control the overall operation of the apparatus 1000 for summarizing a document. For example, the processor 1030 may include an operation of extracting or searching for a summary target document based on a user search query to be described below and an operation of acquiring or generating a summary sentence from an extracted summary target document to control the overall operation of the apparatus 1000 for summarizing a document. Specifically, the processor 1030 may load and execute a program for the overall operation of the apparatus 1000 for summarizing a document from the memory 1020. The processor 1030 may be implemented as an application processor (AP), a central processing unit (CPU), a microcontroller unit (MCU), or devices similar thereto according to hardware, software, or a combination thereof. In this case, the processor 1030 may be provided in the form of an electronic circuit that processes an electrical signal to perform a control function in terms of hardware, and may be provided in the form of a program or code for driving a hardware circuit in terms of software.

The apparatus 1000 for summarizing a document according to the embodiment of the present application may search the search database based on the user search query to extract a document candidate group including at least one or more documents. Furthermore, the apparatus 1000 for summarizing a document may determine a summary target document among the extracted document candidates by analyzing a similarity between contents of a document included in the extracted document candidate group and the user search query. In this regard, it will be described in more detail with reference to FIGS. 2 and 4 to 6.

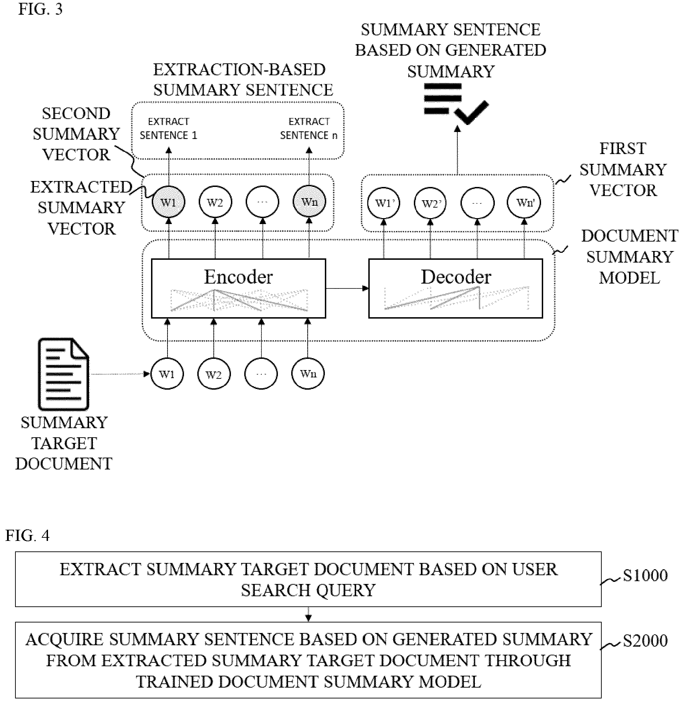

The apparatus 1000 for summarizing a document according to an embodiment of the present application may perform an operation of summarizing a summary target document. As an example, the apparatus 1000 for summarizing a document may perform an operation of generating a summary sentence from a summary target document using a trained document summary model. Meanwhile, the trained document summary model according to the embodiment of the present application is configured to simultaneously generate a generated summary sentence and an extracted summary sentence based on the summary target document. In this regard, it will be described in more detail with reference to FIGS. 3 and 7 to 9.

Hereinafter, a method and apparatus for summarizing a document according to an embodiment of the present application will be described with reference to FIGS. 2 and 3.

FIG. 2 is a diagram illustrating an operation of searching for a summary target document from a user search query of the apparatus 1000 for summarizing a document according to the embodiment of the present application.

The apparatus 1000 for summarizing a document according to the embodiment of the present application may perform an operation of constructing a search database 1100 using an original data source. Specifically, the apparatus 1000 for summarizing a document may acquire an original data source, and perform indexing of each document itself included in the original data source and/or vectorization on contents included in each document. For example, the apparatus 1000 for summarizing a document may construct the search database using the original data source through an extract, transform, load (ETL) technique. Furthermore, the apparatus 1000 for summarizing a document may search for a document using an index for each document itself and/or an embedding vector related to each document.

The apparatus 1000 for summarizing a document according to the embodiment of the present application may acquire a user search query from a user device and extract key query information indicating a key feature of the user search query. Specifically, the apparatus 1000 for summarizing a document may analyze the features of a natural language of the user search query through a user query analysis module 1200 to extract key query information related to a domain, intent, and/or a keyword of the user search query. Furthermore, the apparatus 1000 for summarizing a document may transmit the extracted key query information to a search module 1300.

The apparatus 1000 for summarizing a document according to the embodiment of the present application may search the search database 1100 based on the user search query to acquire a document candidate group.

As an example, the search module 1300 of the apparatus 1000 for summarizing a document may search for the document related to the user search query in the search database 1100 through a keyword-based search. Specifically, the search module 1300 may extract documents corresponding to an index (or keyword) related to key query information as a document candidate group based on the key query information extracted through the user query analysis module 1200 and the index (or keyword) of the document in the search database 1100. For example, the search module 1300 may calculate a score for relevance between the key query information and the index (or keyword) of the document in the search database 1100, and acquire the corresponding documents within a predetermined ranking as a document candidate group.

As another example, the search module 1300 of the apparatus 1000 for summarizing a document may search for the document related to the user search query in the search database 1100 through a vector search. Specifically, the search module 1300 may calculate a similarity between a vector extracted from the user search query and an embedding vector of each sentence included in the document stored in the search database 1100, and extract a document candidate group based on the calculated similarity. For example, the search module 1300 may calculate a score for a similarity between vector information corresponding to the user search query and the embedding vector of the document stored in the search database, and acquire documents including the corresponding embedding vector within a predetermined ranking as the document candidate group.

As another example, the search module 1300 of the apparatus 1000 for summarizing a document may acquire the document candidate group based on the relevance score calculated based on the above-described keyword-based search and the similarity score calculated based on the vector search. In more detail, the search module 1300 may sum the relevance scores and similarity scores, and acquire the corresponding documents within the predetermined ranking as the document candidate group based on the summed score.

Meanwhile, the search module 1300 according to the embodiment of the present application may be configured to search the search database 1100 by applying a full scan method which is a method of performing a search for all search targets or applying a nearest neighbors calculation technique considering a similarity comparison operation cost between vectors depending on how many search targets are in the search database 1100.

Meanwhile, in FIG. 2, it has been described that the database for storing the original data source is provided outside the apparatus 1000 for summarizing a document, and the search database 1100 is included in the apparatus 1000 for summarizing a document. However, this is only exemplary, and if necessary, the database storing the original data source may be integrated with the apparatus 1000 for summarizing a document, or the search database 1100 may be appropriately modified to be separately configured from the apparatus 1000 for summarizing a document.

The apparatus 1000 for summarizing a document according to the embodiment of the present application may perform an operation of adjusting the search ranking of the documents included in the document candidate group, and determining the summary target document from the documents included in the document candidate group according to the adjusted search ranking. Specifically, the search ranking adjustment module 1400 of the apparatus 1000 for summarizing a document may measure the similarity between the document included in the document candidate group and the user search query through a deep learning model, and adjust the search ranking of the document included in the document candidate group based on the measured similarity. For example, the search ranking adjustment module 1400 may input the user search query and the document included in the document candidate group to a transformer fine-tune model (e.g., a BERT model or a cross-encoder) to analyze the user search query and the document in semantic units, and measure the similarity between the user search query and the keyword (or the sentence unit vector included in the document) of the document to adjust the search ranking of the document included in the document candidate group. Furthermore, the search ranking adjustment module 1400 may determine the summary target document based on the adjusted search ranking.

FIG. 3 is a diagram illustrating an operation of generating a summary sentence through the document summary model of the apparatus 1000 for summarizing a document according to the embodiment of the present application.

The apparatus 1000 for summarizing a document according to the embodiment of the present application may generate a first summary sentence based on a generated summary and/or a second summary sentence based on an extracted summary from the summary target document.

As an example, the apparatus 1000 for summarizing a document may generate the first summary sentence based on the generated summary from the summary target document through the trained document summary model. Specifically, the apparatus 1000 for summarizing a document may be configured to input vectors (e.g., W1, W2, Wn, etc., in FIG. 3) converted into sentence units, which correspond to the sentences included in the summary target document, to an encoder of the trained document summary encoder, extract a feature vector through the encoder, and acquire first summary vectors (e.g., W1', W2', Wn', etc., in FIG. 3) from the feature vector through a decoder. In this case, the apparatus 1000 for summarizing a document may generate the first summary sentence based on the generated summary from the first summary vector. Since the document summary model may be trained to output output data so that the output data approximates a summary vector corresponding to a sentence included in the generated summary correct answer sentence from the vector corresponding to a sentence included in the original document using the training data set including the original document and the generated summary correct answer sentence (generated summary correct answer information), the document summary model may output a generation-based summary sentence (or first summary vector for generating a generation-based summary sentence) from the summary target document.

As an example, the apparatus 1000 for summarizing a document may generate the second summary sentence based on the extracted summary from the summary target document through the trained document summary model. Specifically, the apparatus 1000 for summarizing a document may be configured to input vectors (e.g., W1, W2, Wn, etc., in FIG. 3) converted into sentence units, which correspond to the sentences included in the summary target document, to the encoder of the trained document summary encoder and acquire second summary vectors (e.g., W1, W2, Wn, etc., in FIG. 3) through the output layer of the encoder. In this case, the apparatus 1000 for summarizing a document may determine extracted summary vectors (e.g., W1 and Wn in FIG. 3) for generating the second summary sentence among the second summary vectors, extract the sentences (e.g., sentence 1 and sentence n in FIG. 3) of the summary target document based on the determined extracted summary vector, and generate the second summary sentence based on the extracted sentences. The document summary model may be implemented to compare the similarity between the sentence included in the generated summary correct answer sentence of the training data set and the sentence included in the original document to determine the second summary vectors corresponding to sentences with relatively high similarity as the extracted summary vectors (e.g., W1 and Wn in FIG. 3), and generate the second summary sentence based on the sentences (e.g., sentence 1 and sentence n) corresponding to the determined extracted summary vector.

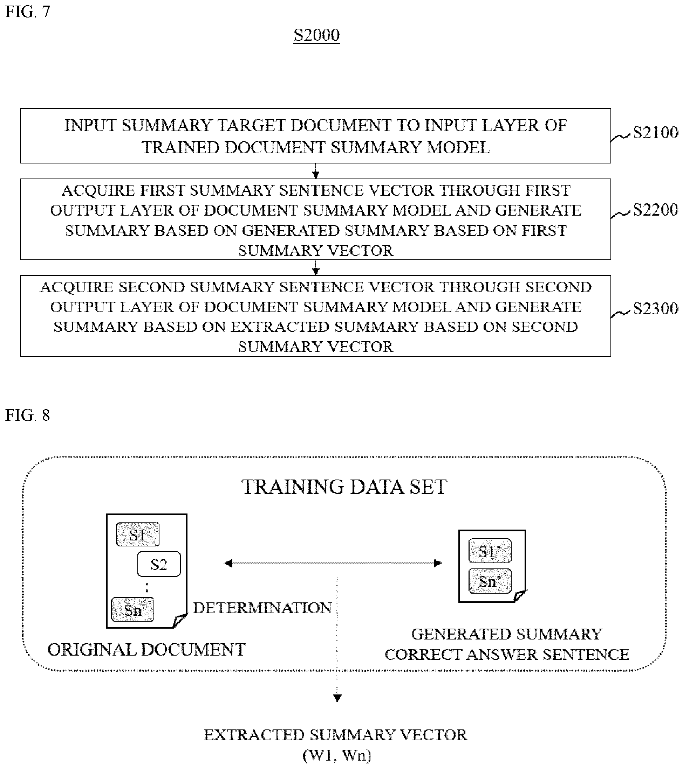

The method of generating a summary sentence and the contents of training the document summary model for generating the summary sentence will be described in more detail with reference to FIGS. 7 to 9.

Hereinafter, a method of summarizing a document and a method of training a document summary model according to an embodiment of the present application will be described in more detail with reference to FIGS. 4 to 9. In describing the method of summarizing a document and the method of training a document summary model according to the embodiment of the present application, some embodiments that overlap with those described with reference to FIGS. 2 to 3 may be omitted. However, this is only for convenience of description, and should not be construed as being limited thereto.

FIG. 4 is a flowchart illustrating the method of summarizing a document according to the embodiment of the present application.

The method of summarizing a document according to the embodiment of the present application may include an operation S1000 of extracting the summary target document based on the user search query and an operation S2000 of acquiring the summary sentence based on the generated summary from the extracted summary target document through the trained document summary model.

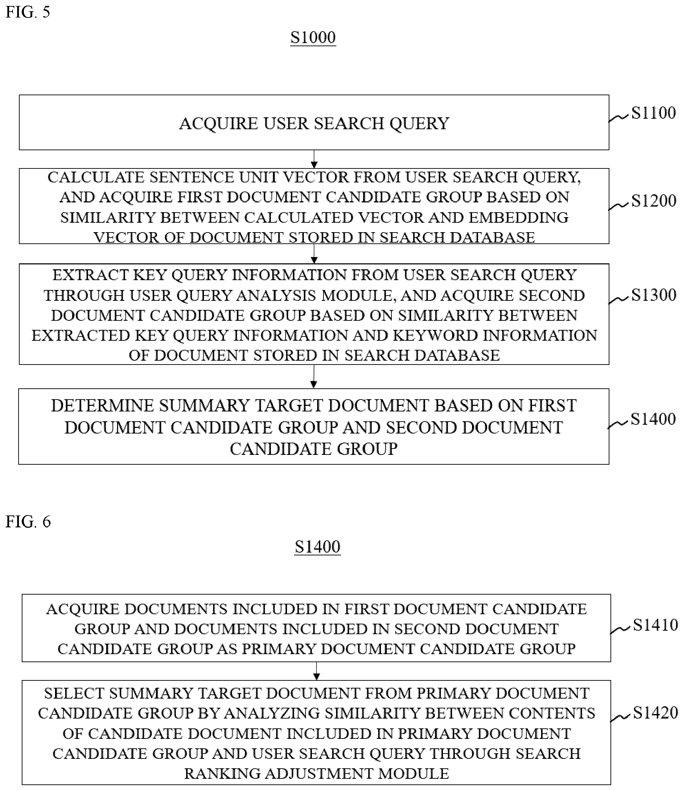

In the operation S1000 of extracting the summary target document based on the user search query, the apparatus 1000 for summarizing a document may search the search database based on the user search query to determine the document candidate group including at least one or more documents. Furthermore, in the operation S1000 of extracting the summary target document based on the user search query, the apparatus 1000 for summarizing a document may determine the summary target document among the extracted document candidate groups by analyzing the similarity between the contents of the document included in the extracted document candidate group and the user search query. The contents of extracting the summary target document will be described in more detail with reference to FIGS. 5 and 6.

In the operation S2000 of acquiring the summary sentence based on the generated summary from the extracted summary target document through the trained document summary model, the apparatus 1000 for summarizing a document may input the extracted summary target document to the trained document summary model, acquire the first summary vector through the document summary model, and generate the first summary sentence based on the generated summary based on the first summary vector. The contents of acquiring the summary sentence will be described in more detail with reference to FIGS. 7 to 9.

FIG. 5 is a flowchart illustrating the operation S1000 of extracting the summary target document in detail according to the embodiment of the present application.

According to an embodiment of the present application, the operation S1000 of extracting the summary target document may further include: an operation S1100 of acquiring the user search query; an operation S1200 of calculating a sentence unit vector from the user search query and acquiring a first document candidate group based on a similarity between the calculated vector and an embedding vector of a document stored in the search database 1100; an operation 1300 of extracting key query information from the user search query through the user query analysis module 1200, and acquiring a second document candidate group based on a similarity between the extracted key query information and keyword information of the document stored in the search database 1100; and an operation S1400 of determining the summary target document based on the first document candidate group and the second document candidate group.

In the operation S1100 of acquiring the user search query, the apparatus 1000 for summarizing a document may acquire the user search query requesting the search for the document from the user device through the transceiver 1010. Here, the user search query may be used as a meaning encompassing information for a search in any suitable form, including a keyword form, a sentence in a natural language form, or a vector form.

In the operation S1200 of calculating the sentence unit vector from the user search query and acquiring the first document candidate group based on the similarity between the calculated vector and the embedding vector of the document stored in the search database 1100, the apparatus 1000 for summarizing a document may search for the document related to the user search query in the search database 1100 through the vector search. Specifically, the apparatus 1000 for summarizing a document may calculate the sentence unit vector from the user search query, and calculate a similarity between a vector corresponding to the calculated user search query and an embedding vector of each sentence included in the document stored in the search database 1100 built in advance. Specifically, the search module 1300 of the apparatus 1000 for summarizing a document may calculate a score for a similarity between vector information corresponding to the user search query and the embedding vectors of the document stored in the search database, and acquire documents including the corresponding embedding vector within a predetermined ranking as the document candidate group.

In the operation S1300 of extracting the key query information from the user search query through the user query analysis module 1200 and acquiring the second document candidate group based on the similarity between the extracted key query information and the keyword information of the document stored in the search database 1100, the apparatus 1000 for summarizing a document may search for the document related to the user search query in the search database 1100 through the keyword-based search. Specifically, the apparatus 1000 for summarizing a document may extract the key query information indicating the domain, the intent, and/or the keyword of the user search query through the user query analysis module 1200. In this case, the search module 1300 may extract the documents corresponding to the index related to the key query information as the second document candidate group based on the key query information and the index (or keyword) of the document stored in the search database 1100 built in advance. For example, the search module 1300 may calculate a score for relevance between the key query information and the index (or keyword) of the document in the search database 1100, and acquire the corresponding documents within a predetermined ranking as the second document candidate group.

In the operation S1400 of determining the summary target document based on the first document candidate group and the second document candidate group, the search module 1300 of the apparatus 1000 for summarizing a document may determine the summary target document based on the acquired first document candidate group acquired through the operation S1200 and the second document candidate group acquired through the operation S1300. For example, the search module 1300 may sum the similarity score calculated based on the vector search of operation S1200 and the relevance score calculated based on the keyword-based search of operation S1300, and determine the corresponding documents within the predetermined ranking as the summary target document based on the summed score.

Meanwhile, according to the embodiment of the present application, the apparatus 1000 for summarizing a document may be implemented to adjust the search ranking of the documents included in the first and second document candidate groups, and determine the summary target document based on the adjusted search ranking.

FIG. 6 is a flowchart illustrating the operation S1400 of extracting the summary target document in detail according to the embodiment of the present application.

According to the embodiment of the present application, the operation S1400 of determining the summary target document may further include: an operation S1410 of acquiring the documents included in the first document candidate group and the documents included in the second document candidate group as a primary document candidate group; and an operation S1420 of selecting the summary target document from the primary document candidate group by analyzing a similarity between contents of a candidate document included in the primary document candidate group and the user search query through a search ranking adjustment module 1400.

In the operation S1410 of acquiring the documents included in the first document candidate group and the documents included in the second document candidate group as the primary document candidate group, the search ranking adjustment module 1400 of the apparatus 1000 for summarizing a document may acquire the primary document candidate group including the documents included in the first document candidate group retrieved by the vector search and the documents included in the second document candidate group retrieved by the keyword search.

In the operation S1420 of selecting the summary target document from the primary document candidate group by analyzing the similarity between the contents of the candidate document included in the primary document candidate group and the user search query through the search ranking adjustment module 1400, the apparatus 1000 for summarizing a document may adjust the search ranking of the candidate documents included in the primary document candidate group through the search ranking adjustment module 1400, and determine the summary target document from the candidate documents included in the primary document candidate group according to the adjusted search ranking. Specifically, the search ranking adjustment module 1400 may measure the similarity between the candidate document included in the primary document candidate group and the user search query through the deep learning model, and adjust the search ranking of the candidate document included in the primary document candidate group based on the measured similarity. For example, the search ranking adjustment module 1400 may input the user search query and the candidate document to a transformer fine-tune model (e.g., a BERT model or a cross-encoder) to analyze the user search query and the document in semantic units, and measure the similarity between the user search query and the keyword (or the vector) of the candidate document to adjust the search ranking of the candidate document. In this case, the search ranking adjustment module 1400 may determine the summary target document from the candidate documents included in the primary document candidate group based on the adjusted search ranking.

FIG. 7 is a flowchart illustrating an operation S2000 of acquiring the summary sentence based on the generated summary from the extracted summary target document in detail according to the embodiment of the present application.

The operation S2000 of acquiring the summary sentence based on the generated summary from the extracted summary target document according to the embodiment of the present application may further include an operation S2100 of inputting the summary target document to the input layer of the trained document summary model, an operation S2200 of acquiring the first summary vector through a first output layer of the document summary model and generating the summary sentence based on the generated summary based on the first summary vector, and an operation S2300 of acquiring the second summary vector through a second output layer of the document summary model and generating the summary sentence based on the extracted summary based on the second summary vector.

In the operation S2100 of inputting the summary target document to the input layer of the trained document summary model, the apparatus 1000 for summarizing a document may acquire the trained document summary model. Here, the acquiring of the trained document summary model may mean acquiring any data for properly executing the document summary model, including calculation information, structure information, hierarchical information, and/or parameter information of the trained document summary model. Furthermore, the apparatus 1000 for summarizing a document may input the summary target document extracted through the operation S1000 to the input layer of the trained document summary model. Specifically, the apparatus 1000 for summarizing a document may input a vector Wi converted into a sentence unit, which corresponds to the sentences included in the summary target document, to the input layer of the trained document summary model.

Meanwhile, the document summary model according to the embodiment of the present application may include an encoder and a decoder. The encoder may extract a feature vector from the vector Wi corresponding to each sentence included in the summary target document. In this case, the decoder may be configured to output a summary vector Wi' for generating the summary sentence based on the generated summary from the feature vector. Meanwhile, the encoder according to the embodiment of the present application may be in the form of a bidirectional encoder capable of learning a context, and the decoder may be in the form of an autoregressive decoder capable of learning a causality between a previous context and a subsequent sequence.

Specifically, the apparatus 1000 for summarizing a document may input the vector Wi converted into a sentence unit, which corresponds to the sentences included in the summary target document, to the input layer of the trained document summary model.

In the operation S2200 of acquiring the first summary vector through the first output layer of the document summary model and generating the summary sentence based on the generated summary based on the first summary vector, the apparatus 1000 for summarizing a document may acquire a first summary vector Wi', which corresponds to the vector Wi of the sentence included in the summary target document, through the first output layer of the document summary model. In more detail, the apparatus 1000 for summarizing a document may acquire the first summary vector Wi' through the first output layer of the decoder of the document summary model. In this case, the apparatus 1000 for summarizing a document may generate the first summary sentence based on the generated summary from the first summary vector. As will be described below, since the document summary model may be trained to output output data so that the output data approximates the summary vector Wi' corresponding to a sentence Si' included in the generated summary correct answer sentence from the vector Wi corresponding to a sentence Si included in the original document using the training data set including the original document and the generated summary correct answer sentence, the document summary model may output the summary sentence based on the generated summary (or the first summary vector for generating the summary sentence based on the generated summary) from the summary target document.

In the operation S2300 of acquiring the second summary vector through the second output layer of the document summary model and generating the summary sentence based on the generated summary based on the second summary vector, the apparatus 1000 for summarizing a document may acquire the second summary vector Wi, which corresponds to the vector Wi of the sentence included in the summary target document, through the second output layer of the document summary model. In more detail, the apparatus 1000 for summarizing a document may acquire the first summary vector Wi' through the second output layer of the encoder of the document summary model. In this case, the apparatus 1000 for summarizing a document may generate the second summary sentence based on the extracted summary from the second summary vector. In this case, the apparatus 1000 for summarizing a document may determine the extracted summary vector for generating the second summary sentence among the second summary vectors, extract the sentences of the summary target document based on the determined extracted summary vector, and generate the second summary sentence based on the extracted sentences. As will be described below, the document summary model may be implemented to compare the similarity between the sentences included in the generated summary correct answer sentence of the training data set and the sentence included in the original document to determine the second summary vector corresponding to the sentences with relatively high similarity as the extracted summary vector and generate the second summary sentence based on the extracted summary based on the sentence corresponding to the determined extracted summary vector.

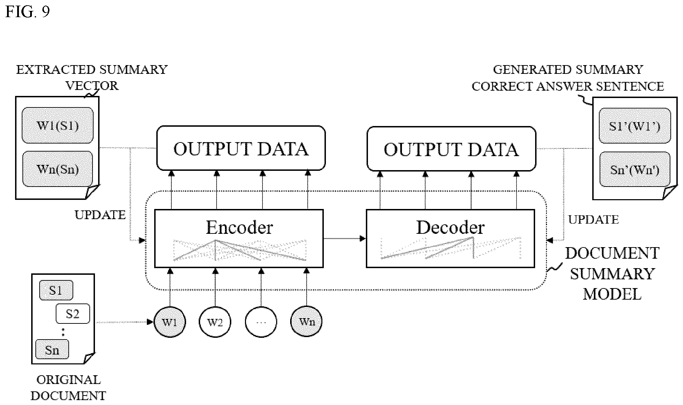

Hereinafter, the method of training a document summary model and the training data set for training the document summary model according to the embodiment of the present application will be described in more detail with reference to FIGS. 8 and 9.

FIG. 8 is a diagram for describing the training data set for training the document summary model according to the embodiment of the present application.

The training data set for training the document summary model may include the original document and the generated summary correct answer sentence. The original document may include at least one or more sentences (e.g., sentence 1 S1, sentence 2 S2, and sentence N Sn in FIG. 8), and the generated summary correct answer sentence is a correct answer sentence that generates and summarizes the original document and may include at least one sentence (for example, summary sentence 1 S1' and summary sentence N Sn' in FIG. 8).

Meanwhile, although FIG. 8 shows that the training data set is configured in the form of the sentence, this is only an example for convenience of explanation, and the training data set may be configured in the form of a vector obtained by vectorizing each sentence of the original document and the generated summary correct answer sentence.

FIG. 9 is a diagram illustrating an aspect of training a document summary model according to an embodiment of the present application.

The apparatus 1000 for summarizing a document according to the embodiment of the present application may train the document summary model based on the above-described training data set. Specifically, the apparatus 1000 for summarizing a document may be configured to input the vector (e.g., vector 1 W1 corresponding to sentence 1 S1, vector 2 W2 corresponding to sentence 2 S2, and vector N Wn corresponding to sentence N in FIG. 9) obtained by vectorizing each sentence (e.g., sentence 1 S1, sentence 2 S2, and sentence N Sn in FIG. 9) of the original document included in the training data set to the input layer of the document summary model. In this case, the encoder of the document summary model may extract a feature vector from each vector, and the decoder of the document summary model may output the output data in the vector form based on the feature vector through the first output layer. In this case, the apparatus 1000 for summarizing a document may train the document summary model based on the output data and the vector (e.g., vector 1 W1' corresponding to summary sentence 1 S1' and vector N Wn' corresponding to summary sentence N in FIG. 9) obtained by vectorizing each summary sentence (e.g., summary sentence 1 S1' and summary sentence N Sn' in FIG. 9) of the generated summary correct answer sentence of the training data set. Specifically, the apparatus 1000 for summarizing a document may update parameters of the document summary model based on the difference between the summary vector (or summary sentence) of the generated summary correct answer sentence and the output data so that the output data is output approximating the summary vector (or summary sentence) of the generated summary correct answer sentence.

Furthermore, the apparatus 1000 for summarizing a document according to the embodiment of the present application may train the document summary model to output the summary vector for generating the summary sentence based on the extracted summary. Referring back to FIG. 8, the apparatus 1000 for summarizing a document may analyze the similarity between the original document of the training data set used to generate the summary sentence based on the generated summary and the generated summary correct answer sentence to determine the extracted summary vectors (e.g., W1 and Wn in FIG. 8) for generating the summary sentence based on the extracted summary. For example, the apparatus 1000 for summarizing a document may analyze the similarity between the sentence Si' of the generated summary correct answer sentence and the sentence Si of the original document, and determine, as the extracted summary vectors (W1 and Wn in FIG. 8), the vector W1 corresponding to the sentence with relatively high similarity, for example, the summary sentence 1 S1' of the generated summary correct answer sentence and the sentence 1 S1 of the original document with high similarity and the vector Wn corresponding to the summary sentence N Sn' of the generated summary correct answer sentence and the sentence N Sn of the original document with high similarity.

In this case, the apparatus 1000 for summarizing a document may train the document summary model so that the document summary model outputs the extracted summary vector (or the sentence corresponding to the extracted summary vector) through the second output layer. For example, the apparatus 1000 for summarizing a document may train the document summary model so that the document summary model outputs the extracted summary vectors (e.g., W1 and Wn) or the sentence (e.g., sentence 1 S1 corresponding to W1 and sentence N Sn corresponding to Wn) corresponding to the extracted summary vector through the second output layer of the encoder.

The document summary model trained according to the embodiment of the present application may generate the first summary vector for generating the summary sentence based on the generated summary and the second summary vector for generating the summary sentence based on the extracted summary based on the summary target document, and the apparatus 1000 for summarizing a document may generate the summary sentence based on the generated summary based on the first summary vector and generate the summary sentence based on the extracted summary based on the second summary vector.

The method and apparatus for summarizing a document according to the embodiment of the present application may be applied to providing a summary sentence of any report. Specifically, paragraphs or documents related to each title or subject words of reports may be primarily searched for, and the summary sentence for the report may be provided by generating the summary sentence for the retrieved paragraphs or documents and matching the generated summary sentence to the part corresponding to the report table of contents.

Furthermore, the method and apparatus for summarizing a document according to the embodiment of the present application may be applied to providing a news curation function. Specifically, the summary sentence generated by generating a summary sentence for news corresponding to a specific category selected by a user and a link to the original news may be provided together, or when the user searches for news in a natural language form, the method and apparatus for summarizing a document according to the embodiment of the present application may be applied to a service for generating the summary sentence of the retrieved news by searching for related news.

According to the method and apparatus for summarizing a document according to the embodiment of the present application, it is possible to provide a summary sentence based on a generated summary and a summary sentence based on an extracted summary at the same time. According to the method and apparatus for summarizing a document according to the embodiment of the present application, by training the document summary model capable of providing generated summary and extracted summary functions only with a training data set for a generated summary, it is possible to provide a summary sentence based on a generated summary and a summary sentence based on an extracted summary at the same time.

Various operations of the above-described apparatus 1000 for summarizing a document may be stored in the memory 1020 of the apparatus 1000 for summarizing a document, and the processor 1030 of the apparatus 1000 for summarizing a document may be provided to perform the operations stored in the memory 1020.

According to a method and apparatus for summarizing a document according to an embodiment of the present application, it is possible to reduce the time consumed for searching for contents desired by a user.

According to a method and apparatus for summarizing a document according to an embodiment of the present application, it is possible for a user to perform document work more efficiently and quickly by performing document work based on a relatively natural generated summary result.

According to a method and apparatus for summarizing a document according to an embodiment of the present application, it is possible to provide a summary sentence based on a generated summary and a summary sentence based on an extracted summary at the same time.

According to a method and apparatus for summarizing a document according to an embodiment of the present application, by training the document summary model capable of providing generated summary and extracted summary functions only with a training data set for a generated summary, it is possible to provide a summary sentence based on a generated summary and a summary sentence based on an extracted summary at the same time.

Effects of the present disclosure are not limited to the above-described effects, and effects that are not described will be clearly understood by those skilled in the art to which the present disclosure pertains from the present specification and the accompanying drawings.

Features, structures, effects, etc., described in the above embodiments are included in at least one embodiment of the present invention, and are not necessarily limited to only one embodiment. Furthermore, the features, structures, effects, etc., illustrated in each embodiment can be combined or modified for other embodiments by those of ordinary skill in the art to which the embodiments belong. Accordingly, the contents related to such combinations and modifications should be interpreted as being included in the scope of the present invention.

In addition, although the embodiments of the present invention have been mainly described above, these are only examples and do not limit the present invention. Those skilled in the art to which the present invention pertains may understand that several modifications and applications that are not described in the present specification may be made without departing from the present invention. That is, each component described in detail in the embodiment may be modified and practiced. In addition, differences associated with these modifications and applications are to be interpreted as being included in the scope of the present invention as defined by the following claims.

## Claims

1. A method of summarizing a document based on a user search query by an apparatus, the method comprising:
extracting a summary target document based on a user search query;
acquiring a trained document summary model; and
inputting the summary target document to the trained document summary model, acquiring a first summary vector through a first output layer of the trained document summary model, and acquiring a summary sentence based on a generated summary based on the first summary vector,
wherein the document summary model is trained based on a training data set including an original document and generated summary correct answer information, acquires the original document through an input layer, and is trained to output output data approximating the generated summary correct answer information based on a difference between the output data output through the first output layer of the document summary model and the generated summary correct answer information.

2. The method of claim 1, wherein the acquiring of the summary sentence based on the generated summary further includes acquiring a second summary vector through a second output layer of the trained document summary model, and acquiring a summary sentence based on an extracted summary based on the second summary vector, and
wherein the document summary model is trained to output an extracted summary vector through the second output layer of the document summary model using the extracted summary vector determined by calculating a similarity between the generated summary correct answer information and each sentence included in the original document.

3. The method of claim 1 or 2, wherein the extracting of the summary target document further includes:
acquiring the user search query;
calculating a sentence unit vector from the user search query, and acquiring a first document candidate group based on a similarity between the calculated sentence unit vector and an embedding vector of a document stored in a search database;
extracting key query information from the user search query through a user query analysis module, and acquiring a second document candidate group based on a similarity between the extracted key query information and keyword information of the document stored in the search database; and
determining the summary target document based on the first document candidate group and the second document candidate group.

4. The method of claim 3, wherein the determining of the summary target document further includes:
acquiring documents included in the first document candidate group and documents included in the second document candidate group as a primary document candidate group; and
selecting the summary target document from the primary document candidate group by analyzing a similarity between contents of a candidate document included in the primary document candidate group and the user search query through a search ranking adjustment module.

5. The method of claim 4, wherein the search ranking adjustment module is configured to receive the candidate document included in the primary document candidate group and the user search query, calculate a similarity score related to a semantic similarity between the candidate document and the user search query, adjust a ranking of the candidate document included in the primary document candidate group based on the calculated similarity score, and select the summary target document from the primary document candidate group based on the adjusted ranking.

6. A computer-readable recording medium on which a program for executing the method of any one of claims 1 to 5 on a computer is recorded.

7. An apparatus for summarizing a document, comprising:
a processor configured to extract a summary target document based on a user search query, acquire a trained document summary model, input the summary target document to the trained document summary model, acquire a first summary vector through a first output layer of the trained document summary model, and acquire a summary sentence based on a generated summary based on the first summary vector,
wherein the document summary model is trained based on a training data set including an original document and generated summary correct answer information, acquires the original document through an input layer, and is trained to output output data through a first output layer of the document summary model and output output data approximating the generated summary correct answer information based on a difference between the output data output through the first output layer of the document summary model and the generated summary correct answer information.
